# FASCICULE DE BREVET EUROPEEN

(11) **EP 3 469 886 B1**
(45) Date de publication et mention de la délivrance du brevet: **13.05.2020**
(21) Numéro de dépôt: 18196943.7
(22) Date de dépôt: 26.09.2018
(51) Int. Cl.: A01G 9/12, F16B 2/22

(54) **DISPOSITIF DE MAINTIEN D'UN PLANT LE LONG D'UN FIL SUSPENDU**
VORRICHTUNG UM EINE PFLANZE ENTLANG EINES AUFGEHÄNGTEN DRAHTES ZU HALTEN
DEVICE FOR HOLDING A PLANT ALONG A SUSPENDED WIRE

(30) Priorité: 13.10.2017 FR 1759622
(43) Date de publication de la demande: 17.04.2019
(73) Titulaire: Gautherot, Basile, 10110 Buxières sur Arce (FR); Gautherot, Philippe, 10110 Buxières sur Arce (FR)
(72) Inventeur: Gautherot, Basile, 10110 Buxières sur Arce (FR); Gautherot, Philippe, 10110 Buxières sur Arce (FR)
(74) Mandataire: Oudin, Stéphane

(56) Documents cités:
- DE-A1-102010 018 559
- FR-A1- 2 790 359
- US-A- 3 805 340
- US-A1- 2005 044 786
- US-A1- 2009 265 894

## Description

### Domaine technique

La présente invention concerne un dispositif de maintien de cultures le long d'un fil suspendu verticalement faisant office de tuteur, ledit dispositif étant notamment utilisé pour la culture de tomates.

### Technique antérieure

Certaines cultures impliquent, du fait du poids de leurs fruits ou légumes, d'attacher les plants à des dispositifs de tuteurage pour favoriser leur croissance verticale et permettre une récolte facile de leurs fruits ou légumes. Tel est en particulier le cas de la culture des tomates, des concombres, des melons ou encore des haricots verts.

Par ailleurs, en raison du poids de leurs fruits ou légumes, il est nécessaire d'entretenir et mettre à niveau desdits dispositifs de tuteurage; pendant la croissance parfois rapide des plants, à défaut la plante dépensera une partie importante de son énergie à se maintenir debout, plutôt qu'à produire de beaux fruits ou légumes.

On connait déjà de nombreuses solutions utilisant des tuteurs en bois, bambou ou métal sur lesquels sont attachés des liens maintenant les plants. Toutes ces solutions sont éprouvées et fonctionnent plutôt bien. Néanmoins, les dispositifs de tuteurage connus présentent encore plusieurs inconvénients :
- compte tenu de la rapidité de la croissance de certains fruits ou légumes, il est nécessaire de revoir régulièrement la position des tuteurs et des liens, ces opérations prenant beaucoup de temps,
- le coût des tuteurs et des liens est significatif, surtout lorsqu'ils sont achetés en petites quantités,
- la pose des liens est délicate car il existe un risque de pincer la tige du plant en serrant trop le lien,
- il est souvent nécessaire de réinstaller les dispositifs de tuteurage d'une année sur l'autre.

Pour pallier ces inconvénients, on connait déjà des dispositifs de tuteurage comprenant des fils suspendus au-dessus de chaque plant et descendant jusqu'au pied de ce dernier, et des organes de maintien aptes à être accrochés le long de chaque fil et refermés autour de la tige du plant, de préférence sous une ramification principale de manière à soulager le plant de son propre poids. Ces organes de maintien sont flexibles et comportent deux branches en forme de C reliées entre elles à l'une de leurs extrémités par une charnière médiane en forme de U, les extrémités libres desdites branches étant pourvues de moyens de fermeture complémentaires pour maintenir les organes de maintien en position "fermée" dans laquelle ils ont une forme globale de cercle. Ces organes de maintien sont de manière générale assez facile à installer puisqu'il suffit de pincer le fil dans la charnière en forme de U de chaque organe de maintien et de refermer les branches pour ceinturer la tige du plant associé.

Le document US 2005044786 décrit un tel système.

Toutefois, une flexibilité excessive, de la charnière notamment, peut être un inconvénient, car elle peut rendre délicate la manipulation de chaque organe de maintien. En effet, pour mettre rapidement en place l'organe de maintien le long du fil suspendu, il est avantageux de saisir ledit organe de maintien entre les deux doigts d'une seule main, classiquement le pouce et l'index. On comprend bien qu'une trop grande flexibilité rend cette opération délicate voire impossible, obligeant l'opérateur à utiliser ses deux mains.

De plus, une flexibilité excessive de l'organe de maintien ne permet pas de garantir son maintien en position "fermée" le long du fil.

Par ailleurs, une trop grande flexibilité présente également l'inconvénient de favoriser "l'emmêlage" des organes de maintien entre eux, lorsqu'ils sont conditionnés en vrac dans un carton.

Enfin, les organes de maintien connus sont réalisés de manière classique en matière plastique. Cette matière présente l'inconvénient de polluer le sol en cas de chute et d'être coûteuse et difficile à recycler et/ou retraiter.

### Exposé de l'invention

Le but de la présente invention est donc de pallier les inconvénients précédemment cités et de proposer une solution alternative aux organes de l'art antérieur pour le maintien de cultures le long d'un fil suspendu qui soit pérenne, solide, facile à mettre en œuvre d'une seule main. La présente invention est en outre écologique afin notamment de ne pas polluer le sol.

A cet égard, il est donc proposé un dispositif de maintien agencé pour maintenir un plant le long d'un fil comportant une première branche et une deuxième branche disposées en vis-à-vis et reliées entre elles à l'une de leurs extrémités par une charnière permettant d'articuler ces dernières entre une position "ouverte" dans laquelle le dispositif de maintien est tel que les extrémités libres de ses première et deuxième branches sont distantes et une position "fermée" dans laquelle lesdites extrémités libres coopèrent, et réciproquement, les extrémités libres de ses première et deuxième branches étant pourvues respectivement de moyens de fermeture et de moyens de fermeture complémentaires pour maintenir le dispositif de maintien en position "fermée", ledit dispositif de maintien étant remarquable en ce que la charnière tend à ramener le dispositif de maintien dans sa position "ouverte", en ce que les moyens de fermeture comprennent au moins un orifice, une rampe inclinée et en ce que les moyens de fermeture complémentaires comprennent un crochet apte à coopérer avec ledit orifice, ladite rampe inclinée servant à guider ledit crochet pour le positionner au-dessus dudit orifice.

De manière préférée, la charnière est en forme générale de U élastiquement déformable et comporte une première aile et une deuxième aile reliées entre elles à l'une de leurs extrémités par une âme, les autres extrémités des première et deuxième ailes étant solidaires respectivement des première et deuxième branches du dispositif de maintien.

La charnière comporte avantageusement deux languettes s'étendant chacune perpendiculairement de la face interne respective des première et deuxième ailes et en direction de l'intérieur de ladite charnière.

L'orifice est de préférence aménagé de sorte que son axe soit globalement perpendiculaire au plan P contenant les lignes neutres des première et deuxième branches du dispositif de maintien.

La rampe inclinée est issue de l'extrémité libre des moyens de fermeture et s'étend au-dessus et en direction dudit orifice desdits moyens de fermeture.

De manière préférée, les moyens de fermeture comprennent un talon de retenue.

Le talon de retenue est avantageusement issu de l'extrémité supérieure de ladite rampe inclinée et s'étend parallèlement au plan P contenant les lignes neutres des première et deuxième branches et en partie au-dessus de l'orifice.

Selon un mode de réalisation préféré, chacune des première et deuxième branches comprend respectivement une barre en forme globale de C et, sensiblement au milieu de sa barre, des rebords disposés en saillie respectivement sur le dessus et le dessous de ladite barre, lesdits rebords augmentant la rigidité de ladite barre et donc des première et deuxième branches, et facilitant la préhension à la main du dispositif de maintien par un opérateur.

### Description sommaire des figures

D'autres avantages et caractéristiques ressortiront mieux de la description qui va suivre de plusieurs variantes d'exécution, données à titre d'exemples non limitatifs, d'un dispositif de maintien conforme à l'invention, en référence aux dessins dans lesquels :
- la figure 1 est une vue en perspective d'un dispositif de maintien selon l'invention mis en place le long d'un fil suspendu et ceinturant la tige d'un plant,
- la figure 2 est une vue en perspective agrandie du dessus d'un dispositif de maintien selon l'invention en position "ouverte",
- la figure 3 est une vue en perspective du dispositif de maintien de la figure 2 selon un autre angle de vue,
- la figure 4 est une vue en perspective du dessous du dispositif de maintien de la figure 2,
- la figure 5 est une vue en perspective du dessus du dispositif de maintien de la figure 2 en position "fermée",
- la figure 6 est une vue du dessous du dispositif de maintien de la figure 5.

### Meilleure manière de réaliser l'invention technique

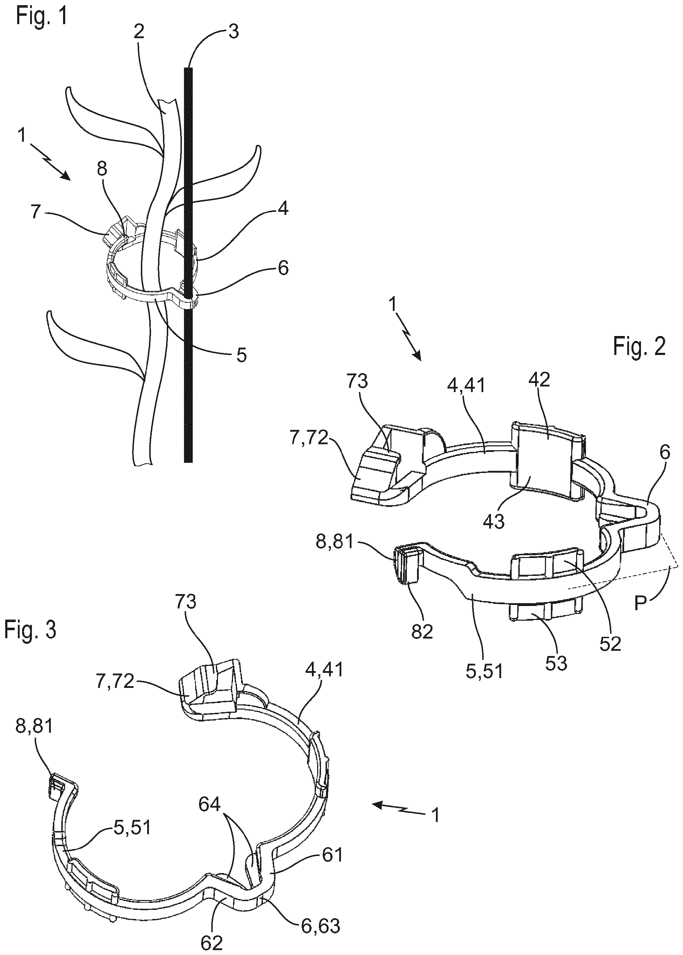

Conformément à l'invention, on a représenté sur la figure 1 un dispositif de maintien 1 destiné à maintenir un plant 2 de culture le long d'un fil 3 faisant office de tuteur, le plant 2 étant du type plant de tomate, par exemple.

Dans ce qui suit, on va décrire un dispositif de maintien 1 d'un plant 2 de culture le long d'un fil 1 suspendu au-dessus dudit plant 2 et descendant sensiblement verticalement jusqu'au pied de ce dernier, ledit dispositif de maintien 1 étant alors positionné horizontalement comme représenté à la figure 1. Il va de soi que le dispositif de maintien 1 pourra être un peu incliné et/ou solidarisé le long d'un fil 3 plus ou moins incliné voire horizontal, les termes tel que, par exemple, dessus, dessous, vertical, horizontal, supérieur ou encore inférieur seront alors à adapter.

En référence aux figures 1 à 5, le dispositif de maintien 1 comporte une première branche 4 et deuxième branche 5 disposées en vis-à-vis et reliées entre elles à l'une de leurs extrémités par une charnière 6 de manière à pouvoir bouger lesdites première et deuxième branches 4,5 entre une position "ouverte" dans laquelle le dispositif de maintien 1 est tel que les extrémités libres de ses première et deuxième branches 4,5 sont distantes et une position "fermée" dans laquelle lesdites extrémités libres coopèrent, ces dernières étant à cet effet pourvues respectivement de moyens de fermeture 7 et de moyens de fermeture complémentaires 8 pour maintenir le dispositif de maintien 1 en position "fermée".

Chacune des première et deuxième branches 4,5 comprend respectivement une barre 41,51 en forme globale de C et ayant une section transversale en forme générale de carré. Toutefois, on comprend bien que la section transversale desdites première et deuxième branches 4,5 pourra être d'une toute autre forme telle que, par exemple, un rectangle, un triangle ou encore une cercle, sans sortir du cadre de la présente invention.

Par ailleurs, on entend ici par "forme globale de C" non seulement une forme hémicirculaire mais également toute forme telle que, par exemple, une forme en demi carré, demi ellipse ou encore demi triangle, permettant en association avec une forme correspondante de ceinturer une tige ou branche d'un plant.

La première branche 4 comporte en outre, sensiblement au milieu de sa barre 41, des rebords 42,43 disposés en saillie respectivement sur le dessus et le dessous de ladite barre 41, lesdits rebords 42,43 étant destinés à augmenter la rigidité de ladite barre 41 et donc de la première branche 4, et à faciliter la préhension à la main du dispositif de maintien 1 par un opérateur.

On désigne ici par "dessus" d'un élément ou partie d'élément, la face qui se trouve en haut dudit élément ou partie d'élément, lorsque le dispositif de maintien 1 est disposé sensiblement horizontal comme représenté à la figure 1. A l'inverse, on désigne ici par "dessous" d'un élément ou partie d'élément, la face qui se trouve alors en bas dudit élément ou partie d'élément.

De façon analogue, la deuxième branche 5 comporte également, sensiblement au milieu de sa barre 51, des rebords 52,53 disposés en saillie respectivement sur le dessus et le dessous de ladite barre 41, lesdits rebords 52,53 étant destinés à augmenter la rigidité de ladite barre 51 et donc de la deuxième branche 5.

Par ailleurs, le dispositif de maintien 1 comprend une charnière 6 en forme générale de U élastiquement déformable, ladite charnière 6 ayant donc une forme de U évasé lorsque le dispositif de maintien 1 est en position "ouverte" et une forme de U lorsque le dispositif de maintien 1 est en position "fermée". De plus, l'élasticité de la charnière 6 est telle qu'elle tend à ramener le dispositif de maintien 1 dans sa position "ouverte".

Ainsi, ladite charnière 6 comporte une première aile 61 et une deuxième aile 62 reliées entre elles à l'une de leurs extrémités par une âme 63, les autres extrémités des première et deuxième ailes 61,62 étant solidaires respectivement des première et deuxième branches 4,5.

Afin de bloquer en position le dispositif de maintien 1 le long du fil 3, la charnière 6 comprend avantageusement deux languettes 64 s'étendant chacune perpendiculairement de la face interne respective des première et deuxième ailes 61,62 et en direction de l'intérieur de ladite charnière 6.

Ainsi, comme représenté sur la figure 1, lorsque l'on engage le fil 3 entre les des première et deuxième ailes 61,62 de la charnière 6 puis que l'on resserre les première et deuxième branches 4,5, le fil 3 se trouve pincé par les languettes 64 et le dispositif de maintien 1 est alors de fait immobilisé le long du fil 3.

Par ailleurs, pour maintenir le dispositif de maintien 1 en position "fermée" et ceinturer la tige du plant 2, les extrémités libres de ses première et deuxième branches 4,5 sont pourvues respectivement de moyens de fermeture 7 et de moyens de fermeture complémentaires 8.

Toutefois, on comprend bien que les moyens de fermeture 7 pourront être disposés à l'extrémité libre de la deuxième branche 5 et que les moyens de fermeture complémentaires 8 pourront être disposés à l'extrémité libre de la première branche 4, sans sortir du cadre de la présente invention.

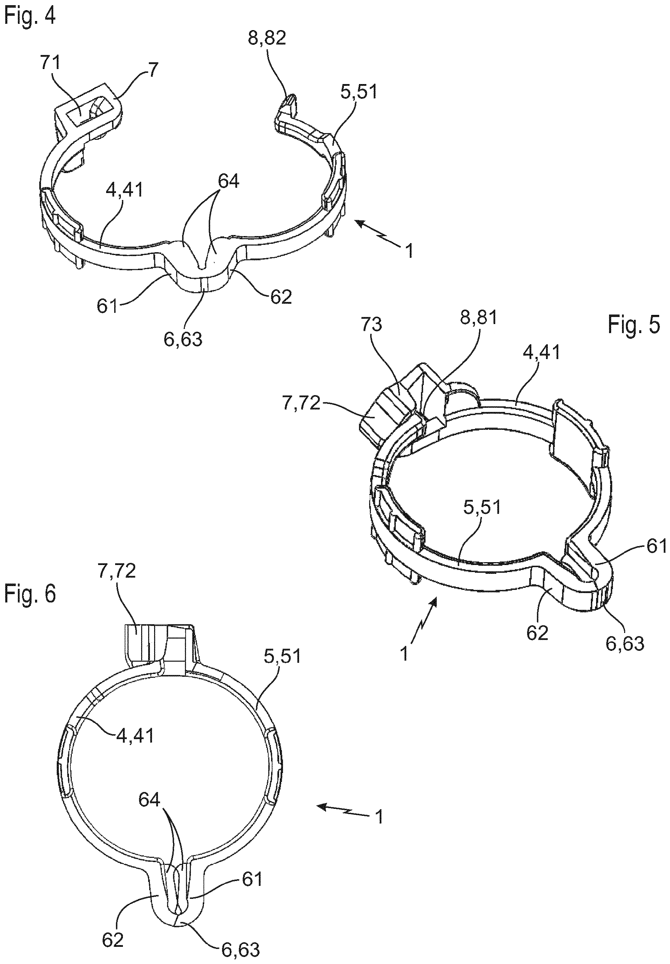

Les moyens de fermeture 7 sont disposés à l'extrémité libre de la première branche 4 et comprennent au moins un orifice 71 (Cf. figure 4), une rampe inclinée 72 et un talon de retenue 73.

De manière préférée, les moyens de fermeture 7 ne sont pas disposés dans le prolongement de l'extrémité libre de la première branche 4, mais ils sont décalés par rapport à ladite extrémité libre vers l'extérieur du dispositif de maintien 1, afin de ménager un maximum d'espace entre lesdites première et deuxième branches 4,5.

Ledit orifice 71 est aménagé de sorte que son axe soit globalement perpendiculaire au plan P (Cf. figure 2) contenant les lignes neutres des première et deuxième branches 4,5, et est avantageusement de section carrée ou rectangulaire.

La rampe inclinée 72 est issue de l'extrémité libre des moyens de fermeture 7 et s'étend au-dessus et en direction dudit orifice 71. Toutefois, la rampe inclinée 72 ne s'étend avantageusement pas au-delà dudit orifice 71.

Le talon de retenue 73 est issu de l'extrémité supérieure de ladite rampe inclinée 72 et s'étend parallèlement au plan P contenant les lignes neutres des première et deuxième branches 4,5 et en partie au-dessus de l'orifice 71.

Les moyens de fermeture complémentaires 8 sont disposés à l'extrémité libre de la deuxième branche 5 et comprennent un crochet 81 formé par un rebord 82 issu de l'extrémité libre de la deuxième branche 5 et s'étendant vers le dessous de cette dernière.

Pour les mêmes raisons que celle décrites précédemment, les moyens de fermeture 8 ne sont de préférence pas disposés dans le prolongement de l'extrémité libre de la deuxième branche 5, mais ils sont décalés par rapport à ladite extrémité libre vers l'extérieur du dispositif de maintien 1.

Ainsi, avec cette configuration, pour amener le dispositif de maintien 1 de sa position "ouverte" à sa position "fermée", il faut saisir les première et deuxième branches 4,5 de ce dernier entre le pouce et l'index d'une main, puis resserrer les doigts de manière à ce que les extrémités libres desdites première et deuxième branches 4,5 se rapprochent et que les moyens de fermeture 7 viennent en contact avec les moyens de fermeture complémentaires 8.

Ensuite, en continuant à resserrer les doigts, le crochet 81 des moyens de fermeture complémentaires 8 glisse sur la rampe inclinée 72, puis le talon de retenue 73 des moyens de fermeture 7, afin de positionner ledit crochet 81 au-dessus de l'orifice 71 des moyens de fermeture 7.

Enfin, en resserrant encore un peu les doigts, le crochet 81 n'est plus en appui sur le talon de retenue 73 et tombe dans l'orifice 71 pour maintenir bloqué le dispositif de maintien 1 en position "fermée".

L'élasticité de la charnière 6 tend alors à écarter les première et deuxième branches 4,5 l'une de l'autre et à ramener le crochet 81 sous le talon de retenue 73 de manière à éviter tout déblocage intempestif du dispositif de maintien 1 en position "fermée".

L'homme du Métier n'aura aucune difficulté à dimensionner l'orifice 71,la rampe inclinée 72, le talon de retenue 73 et le crochet 81 pour éviter tout désengagement entre les moyens de fermeture 7 et les moyens de fermeture complémentaires 8 sans l'intervention d'un opérateur consistant à resserrer les extrémités libres desdites première et deuxième branches 4,5.

Le dispositif de maintien 1 selon l'invention est avantageusement réalisé à partir d'une matière non oxydante, biodégradable et non polluante.

Le dispositif de maintien 1 sera donc de préférence réalisé en matière synthétique polymère du type polyamide telle que, par exemple, le polycaprolactame (PA6) et/ou polyoxyméthylène (POM).

Par ailleurs, le dispositif de maintien 1 pourra également être réalisé à partir d'une matière 100% végétale afin d'éviter tout risque de pollution du sol notamment.

De plus, le dispositif de maintien 1 est avantageusement réalisé par moulage et ne présente pas d'arêtes tranchantes susceptibles d'endommager voire de sectionner le plant 2 et/ou le fil 3.

### Possibilité d'application industrielle

Comme décrit précédemment, le dispositif de maintien 1, selon l'invention, s'applique plus particulièrement au maintien d'un plant 2 de culture le long d'un fil 3 suspendu. Il va de soi que le dispositif de maintien 1 peut également être utilisé pour maintenir un plant 2 le long d'un fil 3 tendu horizontalement entre deux poteaux.

Enfin, il est clair que la présente invention ne se limite pas à la seule forme d'exécution de ce dispositif de maintien 1 ; elle en embrasse, au contraire, toutes les variantes de réalisation et d'application telles que définies par les revendications annexées.

## Revendications

1. Dispositif de maintien (1) agencé pour maintenir un plant (2) le long d'un fil (3) comportant une première branche (4) et une deuxième branche (5) disposées en vis-à-vis et reliées entre elles à l'une de leurs extrémités par une charnière (6) permettant de bouger ces dernières entre une position "ouverte" dans laquelle le dispositif de maintien (1) est tel que les extrémités libres de ses première et deuxième branches (4,5) sont distantes et une position "fermée" dans laquelle lesdites extrémités libres coopèrent, et réciproquement, les extrémités libres de ses première et deuxième branches (4,5) étant pourvues respectivement de moyens de fermeture (7) et de moyens de fermeture complémentaires (8) pour maintenir le dispositif de maintien (1) en position "fermée", ledit dispositif de maintien (1) étant **caractérisé en ce que** la charnière (6) tend à ramener le dispositif de maintien (1) dans sa position "ouverte", **en ce que** les moyens de fermeture (7) comprennent au moins un orifice (71), une rampe inclinée (72) et **en ce que** les moyens de fermeture complémentaires (8) comprennent un crochet (81) apte à coopérer avec ledit orifice (71), ladite rampe inclinée (72) servant à guider ledit crochet (81) pour le positionner au-dessus dudit orifice (71).

2. Dispositif de maintien (1) selon la revendication 1 **caractérisé en ce que** la charnière (6) est en forme générale de U élastiquement déformable et comporte une première aile (61) et une deuxième aile (62) reliées entre elles à l'une de leurs extrémités par une âme (63), les autres extrémités des première et deuxième ailes (61,62) étant solidaires respectivement des première et deuxième branches (4,5) du dispositif de maintien (1).

3. Dispositif de maintien (1) selon la revendication 2 **caractérisé en ce que** la charnière (6) comporte deux languettes (64) s'étendant chacune perpendiculairement de la face interne respective des première et deuxième ailes (61,62) et en direction de l'intérieur de ladite charnière (6).

4. Dispositif de maintien (1) selon l'une quelconque des revendications 1 à 3 **caractérisé en ce que** l'orifice (71) est aménagé de sorte que son axe soit globalement perpendiculaire au plan P contenant les lignes neutres des première et deuxième branches (4,5) du dispositif de maintien (1).

5. Dispositif de maintien (1) selon l'une quelconque des revendications 1 à 4 **caractérisé en ce que** la rampe inclinée (72) est issue de l'extrémité libre des moyens de fermeture (7) et s'étend au-dessus et en direction dudit orifice (71) des moyens de fermeture (7).

6. Dispositif de maintien (1) selon l'une quelconque des revendications 1 à 5 **caractérisé en ce que** les moyens de fermeture (7) comprennent un talon de retenue (73).

7. Dispositif de maintien (1) selon la revendication 2 **caractérisé en ce que** le talon de retenue (73) est issu de l'extrémité supérieure de ladite rampe inclinée (72) et s'étend parallèlement au plan P contenant les lignes neutres des première et deuxième branches (4,5) et en partie au-dessus de l'orifice (71).

8. Dispositif de maintien (1) selon l'une quelconque des revendications 1 à 7 **caractérisé en ce que** chacune des première et deuxième branches (4;5) comprend respectivement une barre (41;51) en forme globale de C et, sensiblement au milieu de cette barre (41;51), des rebords (42,43;52,53) disposés en saillie respectivement sur le dessus et le dessous de ladite barre (41;51), lesdits rebords (42,43;52,53) augmentant la rigidité de ladite barre (41;51) et donc des première et deuxième branches (4;5), et facilitant la préhension à la main du dispositif de maintien (1) par un opérateur.

## Patentansprüche

1. Haltevorrichtung (1), die angeordnet ist zum Halten einer Pflanze (2) entlang eines Drahtes (3), umfassend einen ersten Bügel (4) und einen zweiten Bügel (5), die gegenüberliegend angeordnet sind und an einem ihrer Enden durch ein Scharnier (6) miteinander verbunden sind, das ermöglicht, diese zwischen einer "offenen" Position, in der die Haltevorrichtung (1) so ist, dass die freien Enden dieses ersten und zweiten Bügels (4, 5) beabstandet sind, und einer "geschlossenen" Position, in der die freien Enden zusammenwirken, zu bewegen, und umgekehrt, wobei die freien Enden dieses ersten und zweiten Bügels (4, 5) jeweils mit Verschlussmitteln (7) und mit komplementären Verschlussmitteln (8) versehen sind, um die Haltevorrichtung (1) in "geschlossener" Position zu halten, wobei die Haltevorrichtung (1) **dadurch gekennzeichnet ist, dass** das Scharnier (6) dazu neigt, die Haltevorrichtung (1) in ihre "offene" Position zurückzustellen, dadurch, dass die Verschlussmittel (7) mindestens eine Öffnung (71), eine schräge Rampe (72) umfassen und dadurch, dass die komplementären Verschlussmittel (8) einen Haken (81) umfassen, der fähig ist, mit der Öffnung (71) zusammenzuwirken, wobei die schräge Rampe (72) dazu dient, den Haken (81) zu führen, um ihn über der Öffnung (71) zu positionieren.

2. Haltevorrichtung (1) nach Anspruch 1, **dadurch gekennzeichnet, dass** das Scharnier (6) im Allgemeinen die Form eines elastisch verformbaren U aufweist und einen ersten Flügel (61) und einen zweiten Flügel (62) umfasst, die an einem ihrer Enden durch einen Steg (63) miteinander verbunden sind, wobei die anderen Enden des ersten und zweiten Flügels (61, 62) jeweils fest mit dem ersten und zweiten Bügel (4, 5) der Haltevorrichtung (1) verbunden sind.

3. Haltevorrichtung (1) nach Anspruch 2, **dadurch gekennzeichnet, dass** das Scharnier (6) zwei Laschen (64) umfasst, die sich jeweils senkrecht von der jeweiligen Innenfläche des ersten und zweiten Flügels (61, 62) und in Richtung Inneres des Scharniers (6) erstrecken.

4. Haltevorrichtung (1) nach einem der Ansprüche 1 bis 3, **dadurch gekennzeichnet, dass** die Öffnung (71) so angelegt ist, dass ihre Achse im Wesentlichen senkrecht zu der Ebene P verläuft, welche die Neutrallinien des ersten und zweiten Bügels (4, 5) der Haltevorrichtung (1) enthält.

5. Haltevorrichtung (1) nach einem der Ansprüche 1 bis 4, **dadurch gekennzeichnet, dass** die schräge Rampe (72) aus dem freien Ende der Verschlussmittel (7) hervorgeht und sich über und in Richtung der Öffnung (71) der Verschlussmittel (7) erstreckt.

6. Haltevorrichtung (1) nach einem der Ansprüche 1 bis 5, **dadurch gekennzeichnet, dass** die Verschlussmittel (7) einen Rückhalteabsatz (73) umfassen.

7. Haltevorrichtung (1) nach Anspruch 2, **dadurch gekennzeichnet, dass** der Rückhalteabsatz (73) aus dem oberen Ende der schrägen Rampe (72) hervorgeht und sich parallel zu der Ebene P, welche die Neutrallinien des ersten und zweiten Bügels (4, 5) enthält, und teilweise über der Öffnung (71) erstreckt.

8. Haltevorrichtung (1) nach einem der Ansprüche 1 bis 7, **dadurch gekennzeichnet, dass** jeder des ersten und zweiten Bügels (4; 5) jeweils eine im Allgemeinen C-förmige Stange (41; 51) umfasst, und im Wesentlichen in der Mitte dieser Stange (41; 51) Erhebungen (42, 43; 52, 53), die vorspringend jeweils auf der Oberseite und der Unterseite der Stange (41; 51) angeordnet sind, wobei die Erhebungen (42, 43; 52, 53) die Steifigkeit der Stange (41; 51) und somit des ersten und zweiten Bügels (4; 5) erhöhen und das Ergreifen der Haltevorrichtung (1) per Hand durch einen Arbeiter erleichtern.

## Claims

1. Holding device (1) arranged to hold a plant (2) along a wire (3) including a first arm (4) and a second arm (5) disposed facing each other and connected to each other at one of their ends by a hinge (6) allowing to move said arms between an "open" position in which the holding device (1) is such that the free ends of its first and second arms (4,5) are distant and a "closed" position in which said free ends cooperate, and vice versa, the free ends of its first and second arms (4,5) being provided respectively with closing means (7) and complementary closing means (8) for holding the holding device (1) in the "closed" position, said holding device (1) being **characterised in that** the hinge (6) tends to bring the holding device (1) back to its "open" position, **in that** the closing means (7) comprise at least one orifice (71), an inclined ramp (72) and **in that** the complementary closing means (8) comprise a hook (81) capable of cooperating with said orifice (71), said inclined ramp (72) being used to guide said hook (81) to position it above said orifice (71) .

2. Holding device (1) according to claim 1, **characterised in that** the hinge (6) has the overall shape of an elastically deformable U and comprises a first leg (61) and a second leg (62) connected to each other at one of their ends by a core (63), the other ends of the first and second legs (61,62) being rigidly connected respectively to the first and second arms (4,5) of the holding device (1).

3. Holding device (1) according to claim 2, **characterised in that** the hinge (6) comprises two tabs (64) each extending perpendicularly from the respective inner face of the first and second legs (61,62) and in the direction of the inside of said hinge (6).

4. Holding device (1) according to any one of claims 1 to 3, **characterised in that** the orifice (71) is arranged so that its axis is globally perpendicular to the plane P containing the neutral lines of the first and second arms (4,5) of the holding device (1).

5. Holding device (1) according to any one of claims 1 to 4, **characterised in that** the inclined ramp (72) comes from the free end of the closing means (7) and extends above and in the direction of said orifice (71) of the closing means (7).

6. Holding device (1) according to any one of claims 1 to 5, **characterised in that** the closing means (7) comprise a retaining heel (73).

7. Holding device (1) according to claim 2, **characterised in that** the retaining heel (73) comes from the upper end of said inclined ramp (72) and extends parallel to the plane P containing the neutral lines of the first and second arms (4,5) and partly above the orifice (71).

8. Holding device (1) according to any one of claims 1 to 7, **characterised in that** each of the first and second arms (4;5) respectively comprises a bar (41;51) in the overall shape of a C and, substantially in the middle of this bar (41;51), flanges (42,43;52,53) disposed protruding respectively on the top and the bottom of said bar (41;51), said flanges (42,43;52,53) increasing the rigidity of said bar (41;51) and thus of the first and second arms (4;5), and facilitating the gripping of the holding device (1) in the hand by an operator.
